# EUROPÄISCHE PATENTSCHRIFT

(11) **EP 2 857 919 B1**
(45) Veröffentlichungstag und Bekanntmachung des Hinweises auf die Patenterteilung: **03.03.2021**
(21) Anmeldenummer: 14177033.9
(22) Anmeldetag: 15.07.2014
(51) Int. Cl.: A01B 79/00

(54) **System zum Steuern des Betriebs eines landwirtschaftlichen Nutzfahrzeugs**
System for controlling the operation of an agricultural commercial vehicle
Système de commande du fonctionnement d'un véhicule utilitaire agricole

(30) Priorität: 01.10.2013 DE 102013016225
(43) Veröffentlichungstag der Anmeldung: 08.04.2015
(73) Patentinhaber: CLAAS Selbstfahrende Erntemaschinen GmbH, 33428 Harsewinkel (DE)
(72) Erfinder: Klüber, Victor, 33378 Rheda-Wiedenbrück (DE)
(74) Vertreter: CLAAS Gruppe

(56) Entgegenhaltungen:
- EP-A1- 2 353 353
- US-A1- 2007 135 190
- US-A1- 2010 063 648

## Beschreibung

Die vorliegende Erfindung betrifft ein System zum Steuern des Betriebs eines oder mehrerer landwirtschaftlicher Nutzfahrzeuge wie etwa Traktoren, die mit unterschiedlichen Arbeitswerkzeugen ausgestattet sein können, oder fahrbaren Erntemaschinen unterschiedlichen Typs.

Der Einsatz moderner Informations- und Navigationstechnik ermöglicht erhebliche Produktivitätszuwächse bei der Bearbeitung landwirtschaftlicher Flächen. Während vor dem Aufkommen der Satellitennavigationstechnik die Planung des Betriebs landwirtschaftlicher Nutzfahrzeuge kaum über eine pauschale Festlegung hinausgehen konnte, zu welcher Zeit und auf welcher Fläche ein Fahrzeug eine gegebene Arbeit verrichten soll, und bei der tatsächlichen Durchführung der Arbeit es weitgehend von der Erfahrung, dem Geschick und der Aufmerksamkeit eines Fahrzeugführers abhing, ob während der Bearbeitung der Fläche eine rationelle Route gefahren wurde und gegebenenfalls die Einstellungen der Arbeitswerkzeuge für die zu erledigende Arbeit angemessen waren, ist es mit heutigen Techniken ohne weiteres möglich, eine rationelle Route zum Bearbeiten einer gegebenen Fläche vorab zu berechnen und das Abfahren der Route durch das Nutzfahrzeug vollautomatisch zu steuern oder doch zumindest den Fahrer beim Abfahren der festgelegten Route wirksam zu unterstützen. Daten zur Bodenbeschaffenheit können gesammelt werden, um z.B. ortsaufgelöst die Dichte des Ernteguts abzuschätzen. Während auch ein erfahrener Fachmann die Einstellungen beispielsweise des Dreschwerks eines Mähdreschers erst dann anpassen kann, wenn eine Veränderung der Erntegutdichte sich bereits auf den Dreschvorgang ausgewirkt hat, kann die anhand gesammelter Daten vorhergesagte Schwankung der Erntegutdichte im Moment ihres Auftretens in den Einstellungen des Dreschwerks berücksichtigt werden, so dass eine gleichbleibend hohe Qualität des Ernteguts bei geringen Verlusten erreicht werden kann.

Um die Nutzung solcher gesammelter Daten zu ermöglichen, müssen diese der landwirtschaftlichen Arbeitsmaschine jedoch rechtzeitig und in aktueller Form zur Verfügung stehen.

Aus EP1403799A1 ist ein Datenaustauschsystem bekannt, mit dem für einen Arbeitseinsatz relevante Daten an eine landwirtschaftliche Arbeitsmaschine übertragen werden können. Diese Daten können beispielsweise die optimale Einstellung von Arbeitsorganen einer Erntemaschine betreffen und auf eine Anfrage einer solchen Erntemaschine hin an diese übermittelt werden. Eine Anfrage einer Arbeitsmaschine kann jedoch nur dann zutreffend beantwortet werden, wenn die Maschine in der Lage ist, sämtliche zur Beantwortung der Frage erforderlichen Informationen zu liefern. So ist beispielsweise die Frage nach einer optimalen Dreschwerkeinstellung eines Mähdreschers im Allgemeinen ohne Kenntnis der zu erntenden Sorte nicht beantwortbar. Ein Fahrer des Mähdreschers wird im Allgemeinen selbst bei genauer Inaugenscheinnahme eines abzuerntenden Bestandes nicht in der Lage sein, die Sorte exakt zu identifizieren, so dass für die Beschaffung der nötigen Informationen Zeit verloren geht. US 2010/063648 A1 offenbart ein autonomes Fahrzeug mit einer verteilten Datenbank, in der die zum Navigieren des Fahrzeugs erforderlichen Daten von den Sensoren an Bord sowie von einem Server gesammelt werden.

Es besteht zwar an sich die Möglichkeit, den Einsatz einer landwirtschaftlichen Maschine exakt vorzuplanen und für den Einsatz benötigte Daten auf die Maschine zu übertragen, bevor sich diese zu der zu bearbeitenden Fläche auf den Weg macht. Bei einem solchen Verfahren ist es jedoch sehr schwierig, einen Einsatz kurzfristig umzuplanen, wenn Unwägbarkeiten wie etwa ein Defekt einer Maschine oder das Wetter dazu zwingen.

Ziel der vorliegenden Erfindung ist, ein System zum Steuern des Betriebs wenigstens eines landwirtschaftlichen Nutzfahrzeugs zu schaffen, das einen effizienten Betrieb des Nutzfahrzeugs erlaubt und es gleichzeitig ermöglicht, auf äußere Einflüsse flexibel zu reagieren.

Die Aufgabe wird gelöst durch ein System zum Steuern des Betriebs eines landwirtschaftlichen Nutzfahrzeugs, mit den Kennzeichnenden Merkmalen des Anspruchs.

Eine solche Steuereinheit kann außerhalb des Nutzfahrzeugs implementiert sein, um eventuell auch mehrere Nutzfahrzeuge zu steuern und diese auf vorgegebene Arbeitskontexte entsprechend ihren Fähigkeiten zu verteilen. Sobald ein Arbeitskontext festgelegt ist, der zum Beispiel eine zu bearbeitende Fläche, die Art der durchzuführenden Arbeit und ein Zeitfenster für die Durchführung der Arbeit spezifiziert, kann ein Nutzfahrzeug zu der betreffenden Fläche geschickt werden. Die Zusammenstellung der von dem Nutzfahrzeug in dem Arbeitskontext benötigten Daten kann zu einem späteren Zeitpunkt erfolgen, spätestens bis zur Aufnahme des Betriebs des Fahrzeugs in dem Arbeitskontext. Daher können bei der Zusammenstellung der relevanten Daten bis zur Aufnahme der Arbeit in dem Arbeitskontext aufgetretene Entwicklungen noch berücksichtigt werden.

Eine Steuereinheit, die die genannten Schritte durchführt, kann auch auf einer hierarchisch niedrigeren, dem Nutzfahrzeug zugeordneten Ebene des Systems angesiedelt sein. Eine solche Steuereinheit, die sich an Bord des Fahrzeugs oder außerhalb von diesem befinden kann, muss nicht notwendigerweise bereits zum Zeitpunkt, an dem der Fahrer sich mit dem Fahrzeug zu dem Arbeitskontext auf den Weg macht, Kenntnis von dem Arbeitskontext haben. Diese Kenntnis kann ihr zum Beispiel durch eine Benutzereingabe vermittelt werden. Fehler bei der Eingabe können jedoch vorteilhafterweise vermieden werden, wenn diese Steuereinheit mit einem Positionssensor des Nutzfahrzeugs nachrichtentechnisch verbunden ist, um den Arbeitskontext anhand der Position des Nutzfahrzeugs zu identifizieren. So genügt es etwa, wenn der Fahrer, wenn er sich in unmittelbarer Nähe der im Rahmen des Arbeitskontexts zu bearbeitenden Fläche befindet, ein Eingabeelement betätigt, um die Steuereinheit zu veranlassen, die aktuelle Position des Fahrzeugs mit den Orten verschiedener gespeicherter Arbeitskontexte zu vergleichen und einen zum aktuellen Ort des Fahrzeugs benachbarten als den aktuell auszuführenden Arbeitskontext zu identifizieren.

Alternativ kann dem Nutzfahrzeug auch ein Mobiltelefon mit Positionssensor, typischerweise ein Smartphone, zugeordnet sein, und die Steuereinheit ist mit dem Mobiltelefon nachrichtentechnisch verbunden, um den Arbeitskontext anhand der Position des Mobiltelefons zu identifizieren. Ein solches System macht die Integration bereits existierender Nutzfahrzeuge besonders einfach, da für die Positionserfassung keinerlei Anpassung des Fahrzeugs selber erforderlich ist und bekannte Smartphones durch Installieren einer entsprechenden Anwendung (App) problemlos in das System integrierbar sind.

Die Steuereinheit ist erfindungsgemäß mit einem Werkzeugsensor zum Erfassen des Vorhandenseins eines Arbeitswerkzeugs des Nutzfahrzeugs nachrichtentechnisch verbunden, um den Arbeitskontext anhand des Vorhandenseins oder Nichtvorhandenseins des Arbeitswerkzeugs zu identifizieren. Dies ermöglicht es der Steuereinheit, beim Identifizieren eines Arbeitskontextes nur solche Kontexte zu berücksichtigen, die das Fahrzeug mit dem vorhandenen Arbeitswerkzeug auch erledigen kann.

Ein Arbeitskontext sollte wenigstens eine zu bearbeitende Fläche und eine auf der Fläche durchzuführende Arbeit spezifizieren.

Die relevanten Daten können eine im Rahmen des Arbeitskontexts zu fahrende Route, eine Dosierung eines zu verteilenden Materials wie etwa Saatgut, Düngemittel, Pflanzenschutzmittel etc., eine Eigenschaft von Erntegut, Wetterdaten und/oder einen Wert eines Betriebsparameters des Fahrzeugs oder seines Arbeitswerkzeugs spezifizieren. Als Eigenschaft von Erntegut kommt zum Beispiel eine Sortenangabe in Betracht, die, wie bereits angesprochen, für die Einstellung eines Dreschwerks relevant sein kann. Anstelle der Sortenangabe können natürlich auch direkt die für die betreffende Sorte idealen Werte von Betriebsparametern des Dreschwerks spezifiziert sein. Ferner kommt als Eigenschaft des Ernteguts beispielsweise dessen Feuchtegehalt in Betracht. Dieser kann für Einstellungen sowohl eines Dreschwerks als auch, falls es sich bei dem Nutzfahrzeug um einen Feldhäcksler handelt, des Häckselwerks relevant sein. Ein solcher Feuchtigkeitswert kann eine unter Berücksichtigung von Wetterdaten der Vergangenheit vorgenommene Schätzung sein, sie kann aber auch auf hochgeladenen Messwerten anderer Nutzfahrzeuge basieren, die im gleichen Arbeitskontext bereits im Einsatz sind oder in zeitlich und örtlich benachbarten Kontexten im Einsatz waren.

Erfindungsgemäß ist die Steuereinheit in einem Bordcomputer des Nutzfahrzeugs realisiert und umfasst ferner einen fahrzeugexternen Computer zum Bereitstellen wenigstens eines ersten Teils der für den Betrieb des Nutzfahrzeugs relevanten Daten. Ein solcher nicht an das Nutzfahrzeug gebundener Computer kann natürlich auch zum Bereitstellen betriebsrelevanter Daten für andere Fahrzeuge genutzt werden.

Besagter erster Teil der Daten kann insbesondere intermediäre Daten umfassen, anhand derer die Steuereinheit oder der fahrzeugexterne Computer in der Lage ist, einen zweiten Teil der relevanten Daten von einem entfernten Server, insbesondere per Internet, anzufordern. Dadurch wird die Möglichkeit geschaffen, Informationen, die beispielsweise Betriebsparameter eines Arbeitswerkzeugs oder die Ausbringung einer Agrarchemikalie betreffen, jeweils kurzfristig von den kompetentesten Stellen, im Allgemeinen dem Hersteller des Werkzeugs bzw. der Chemikalie, einzuholen und im Rahmen des Arbeitskontextes zu berücksichtigen.

Die Steuereinheit an Bord des Nutzfahrzeugs sollte eingerichtet sein, auf den fahrzeugexternen Computer und/oder den entfernten Server über eine Funkverbindung, insbesondere über mobiles Internet, zuzugreifen, um die für den Betrieb des Nutzfahrzeugs in dem ermittelten Arbeitskontext relevanten Daten jederzeit beschaffen zu können, ohne dafür einen bestimmten Ort aufsuchen zu müssen.

Die fahrzeugspezifische Steuereinheit kann auch an dem fahrzeugexternen Computer realisiert und eingerichtet sein, die zusammengestellten Daten an einen Bordcomputer des Nutzfahrzeugs über eine Funkverbindung, insbesondere über mobiles Internet, zu übertragen.

In diesem Fall sind zweckmäßigerweise am fahrzeugexternen Computer intermediäre Daten gespeichert, anhand derer dieser in der Lage ist, wenigstens einen zweiten Teil der relevanten Daten von einem entfernten Server anzufordern.

Der Bordcomputer sollte eingerichtet sein, während des Einsatzes in einem Arbeitskontext gesammelte, die zu bearbeitende Fläche und/oder den Fortschritt der Arbeit betreffende Informationen an den fahrzeugexternen Computer zurückzumelden. Dadurch ist der fahrzeugexterne Computer in der Lage, die relevanten Daten zu aktualisieren, um sie bei einem späteren, dieselbe Fläche betreffenden Arbeitskontext zu berücksichtigen.

Der fahrzeugexterne Computer kann ferner eingerichtet sein, anhand der zurückgemeldeten Informationen über die Zuordnung eines weiteren Nutzfahrzeuges zu dem Arbeitskontext zu entscheiden. Eine solche Zuordnung kann zum Beispiel notwendig werden, wenn die Arbeit aufgrund einer Störung nicht wie geplant fortschreitet, oder falls wegen einer absehbaren Wetteränderung das Zeitfenster des Arbeitskontextes geändert werden muss.

In einem solchen Falle sollte der fahrzeugexterne Computer auch für den Betrieb des weiteren Nutzfahrzeugs in dem Arbeitskontext relevante Daten zusammenstellen.

Weitere Merkmale und Vorteile der Erfindung ergeben sich aus der nachfolgenden Beschreibung von Ausführungsbeispielen unter Bezugnahme auf die beigefügte Figur.

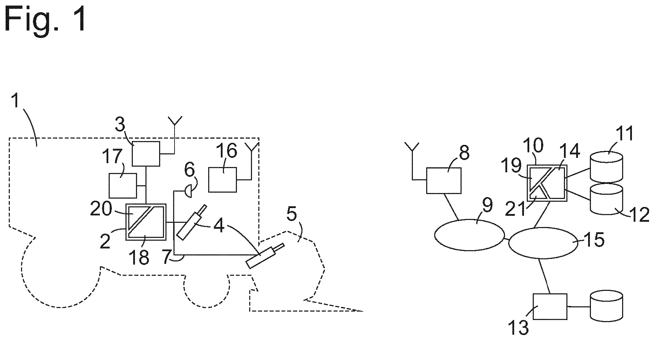

- Fig. 1: zeigt ein Blockdiagramm eines erfindungsgemäßen Steuerungssystems.

An Bord eines landwirtschaftlichen Nutzfahrzeugs, hier eines Mähdreschers 1, befindet sich ein Bordcomputer 2, der mit einer Funkschnittstelle 3, diversen Aktoren 4 zum Einstellen von Betriebsparametern des Mähdreschers 1 selbst oder eines Arbeitswerkzeugs, hier eines austauschbaren Erntevorsatzes 5, und einem oder mehreren Sensoren 6 verbunden ist. Wenigstens einer der Sensoren 6 dient zum Erfassen des Vorhandenseins und des Typs des Erntevorsatzes 5, er kann zum Beispiel durch einen oder mehrere Schalter gebildet sein, die in Kontakt mit dem Erntevorsatz 5 in jeweils für dessen Typ spezifischer Weise betätigt werden, so dass der Bordcomputer 2 anhand der Kombination von Zuständen der Schalter in der Lage ist, den Erntevorsatz 5 zu identifizieren. Denkbar ist aber auch, den Sensor in Software zu implementieren, beispielsweise, indem der Bordcomputer 2 über einen Bus 7, der sich bis in den Erntevorsatz 5 erstreckt, eine Typinformation aus von dem Erntevorsatz 5 empfangenen Daten ableitet.

Die Funkschnittstelle 3 dient einerseits dem Empfang von Satellitensignalen, insbesondere GPS-Signalen, anhand derer der Bordcomputer 2 oder, im hier betrachteten Fall, ein an sich bekanntes Navigationssystem 17 in der Lage ist, die geographische Position des Mähdreschers 1 abzuleiten, und andererseits der Kommunikation des Bordcomputers 2 mit einer benachbarten Basisstation 8 eines Mobilfunknetzes 9.

An das Mobilfunknetz 9 sind über Internet 15 ferner angeschlossen:
- ein Computer 10, der Zugriff auf eine Datenbank 11 mit geographischen Daten von zu bearbeitenden landwirtschaftlichen Flächen und auf eine Datenbank 12 mit technischen Daten und Angaben zur zeitlichen Verfügbarkeit von landwirtschaftlichen Nutzfahrzeugen, darunter dem Mähdrescher 1, enthält, sowie
- Server 13 von Herstellern der in der Datenbank 12 verzeichneten Nutzfahrzeuge sowie ggf. von Saatgutzüchtern, Herstellern von Agrarchemikalien etc.

Der Computer 10 kann typischerweise zu einem landwirtschaftlichen Betrieb gehören, der die in der Flächendatenbank 11 verzeichneten Flächen nutzt und zu dem die Fahrzeuge der Fahrzeugdatenbank 12 gehören. Eines von eventuell mehreren auf dem Computer 10 laufenden Programmen befähigt diesen, als Server 14 zu arbeiten, der externen Anfragern Zugang zu den Datenbanken 11, 12 vermittelt. Im Folgenden wird der Fall betrachtet, dass der Computer 10 zu einem Lohnunternehmen gehört, das im Auftrag von landwirtschaftlichen Betrieben seine Fahrzeuge auf deren Flächen einsetzt und zu diesem Zweck die Flächen betreffende Daten entweder in einer eigenen Datenbank 11 führt oder Zugriff auf Datenbanken 11 der entsprechenden Betriebe hat.

Die Fahrzeugdatenbank 12 kann zweckmäßigerweise über die Fahrzeuge des betreffenden landwirtschaftlichen Betriebs oder Lohnunternehmens hinaus noch weitere Fahrzeuge, z.B. einer Kooperative, der der Betrieb angehört, oder eines Fahrzeugvermieters enthalten, auf die im Falle unvorhergesehenen Bedarfs zugegriffen werden kann.

Ein typischer Einsatz des Mähdreschers 1 im Rahmen des erfindungsgemäßen Systems kann beispielsweise folgendermaßen aussehen: Basierend auf den Angaben verschiedener landwirtschaftlicher Betriebe über auf deren Flächen durchzuführende Arbeiten und die dafür vorgesehenen Zeiten disponiert der Lohnunternehmer Einsatzzeit und Ort seiner Fahrzeuge und erteilt zu gegebener Zeit dem Fahrer des Mähdreschers 1 Weisung, sich zu einer gegebenen Fläche zu begeben, um diese abzuernten. Diese Weisung kann telefonisch an ein Mobiltelefon 16 des Fahrers gegeben werden, denkbar ist aber auch, die Weisung per E-Mail über das Internet 15 und das Mobilfunknetz 9 an ein Kommunikationsprogramm 20 auf dem Bordcomputer 2 zu übertragen, um sie von diesem auf einem Bildschirm in der Fahrerkabine des Mähdreschers 1 anzeigen zu lassen.

Es kann vorgesehen sein, dass die Zielangabe von dem Kommunikationsprogramm 20 automatisch oder auf eine Eingabe des Fahrers hin an das Navigationssystem 17 übergeben wird, das daraufhin in an sich bekannter Weise den Fahrer mit Navigationshinweisen zum Finden der zu bearbeitenden Fläche versorgt.

Auf dem Bordcomputer 2 läuft ein weiteres Programm, das diesen befähigt, als eine fahrzeuggestützte Steuereinheit 18 zu arbeiten. Wenn der Mähdrescher 1 sich in unmittelbarer Nähe der laut Weisung zu bearbeitenden Fläche befindet, nimmt der Fahrer eine Eingabe an dieser Steuereinheit 18 vor. Diese ermittelt daraufhin den aktuellen Arbeitskontext des Mähdreschers, indem sie dessen aktuelle geographische Position anhand der von der Funkschnittstelle 3 empfangenen Satellitensignale ermittelt, mit den vom Server 14 bereitgestellten Lagedaten der in der Flächen-Datenbank 11 als von einem Mähdrescher zu bearbeitend eingetragenen Flächen vergleicht und die nächstgelegene unter diesen Flächen als die zu bearbeitende annimmt.

Neben der auf diese Weise identifizierten zu bearbeitenden Fläche umfasst der Arbeitskontext auch die darauf zu erledigende Tätigkeit. Wenn, wie im hier betrachteten Beispielfall, das Nutzfahrzeug ein Mähdrescher ist, steht von vorneherein fest, dass als Tätigkeit nur das Abernten eines Getreidebestandes in Betracht kommt, so dass die Steuereinheit 18 nur diejenigen Einträge in der Flächen-Datenbank 11 berücksichtigt, an denen genau diese Tätigkeit durchzuführen ist. Wenn das im Rahmen des erfindungsgemäßen Systems eingesetzte Nutzfahrzeug ein Traktor ist, dann können die durchgeführten Tätigkeiten je nach Typ des an dem Traktor montierten Werkzeugs unterschiedlich sein. In einem solchen Fall ermittelt die Steuereinheit 18 mit Hilfe des Sensors 6 zunächst den Typ des montierten Werkzeugs und der damit durchführbaren Tätigkeiten, um damit die Einträge der Flächen-Datenbank 11 zu filtern.

Nachdem der Arbeitskontext auf diese Weise ermittelt ist, kann die Steuereinheit 18 Detailinformationen zu der in diesem Kontext zu bearbeitenden Fläche von der Datenbank 11 abfragen. Der Umfang dieser Detailinformationen kann von einer Ausgestaltung des Systems zur anderen variieren. So ist beispielsweise denkbar, dass als Detailinformationen der Grenzverlauf der zu bearbeitenden Fläche übermittelt wird, um die Steuereinheit 18 in die Lage zu versetzen, eine Route zu errechnen, auf der die Fläche mit minimalem Aufwand abgeerntet werden kann. Denkbar ist aber auch, dass jeweils fertig geplante Routen in der Datenbank 11 gespeichert sind und als Detailinformationen an die Steuereinheit 18 übermittelt werden.

Des weiteren empfängt die Steuereinheit 18 aus der Datenbank 11 eine Angabe über die auf der Fläche zu erntende Sorte. Anhand dieser Angabe fragt die Steuereinheit 18 vom Server 13 des Mähdrescherherstellers empfohlene Einstellungen des Dreschwerks für die betreffende Sorte ab, um das Dreschwerk des Mähdreschers 1 entsprechend einzustellen.

Weitere Hinweise für die Optimierung des Erntevorgangs kann die Steuereinheit 18 beispielsweise aus in der Datenbank 11 hinterlegten Daten betreffend Niederschläge auf der zu bearbeitenden Fläche bzw. aus einem anhand dieser Daten abzuschätzenden Feuchtegehalt des Ernteguts ableiten.

Während der Mähdrescher 1 die Fläche bearbeitet, liefert der Bordcomputer 2 fortlaufend Daten betreffend den Fortschritt auf der abzufahrenden Route, die Menge und ggf. andere Eigenschaften des geernteten Materials etc. an den Computer 10. Diese Daten ermöglichen es Letzterem, als ein weiteres Nutzfahrzeug im Rahmen des erfindungsgemäßen Systems ein Transportfahrzeug rechtzeitig zu der Fläche zu schicken, damit der Mähdrescher 1, ohne seine Arbeit zu unterbrechen, das geerntete Material auf das Transportfahrzeug umladen kann.

Anhand der vom Bordcomputer 2 hochgeladenen Informationen ist der Computer 10 in der Lage, den Fortschritt bei der Bearbeitung des Arbeitskontexts zu überwachen. Falls Probleme auftreten und absehbar wird, dass die Bearbeitung der Fläche nicht innerhalb des vorgesehenen Zeitfensters abgeschlossen werden kann, falls wegen aufziehenden Schlechtwetters das Zeitfenster verkürzt werden muss oder falls der Bedarf an Transportkapazität zum Abtransportieren des Ernteguts höher als ursprünglich veranschlagt ist, kann der Computer 10 anhand der Datenbank 12 abprüfen, ob und ggf. zu welchen Kosten ein weiterer Mähdrescher oder ein weiteres Transportfahrzeug zu der Fläche geschickt werden kann, und ggf. eine entsprechende Weisung an den Fahrer des betreffenden Fahrzeugs schicken. In die Kostenkalkulation kann insbesondere eingehen, ob das hinzuzuziehende Fahrzeug im Besitz des Lohunternehmens ist oder ob es kurzfristig angemietet werden muss, wie lang sein Anfahrtweg ist, und ob es ggf. aus einem anderen, weniger dringlichen Arbeitskontext abgezogen werden muss.

Nach Bearbeitung dieser ersten Fläche erhält der Fahrer des Mähdreschers 1 Weisung, eine zweite Fläche anzusteuern. Die Ermittlung des Arbeitskontexts läuft beim Eintreffen an dieser zweiten Fläche in gleicher Weise ab wie oben beschrieben. Auf der zweiten Fläche ist bereits ein anderer Mähdrescher im Einsatz und hat bereits einen Teil der Fläche bearbeitet. Da der Computer 10 auch von diesem zweiten Mähdrescher kontinuierlich Rückmeldung über den auf der für ihn geplanten Route zurückgelegten Weg erhält, ist er in der Lage, die bei Eintreffen des ersten Mähdreschers noch unbearbeitete Restfläche zwischen beiden Mähdreschern aufzuteilen, für beide neue Routen zu planen, auf denen sie die Restfläche zügig abarbeiten können, und die jeweils geplanten Routen den Steuereinheiten 18 beider Mähdrescher zum Herunterladen bereitzustellen. Da die betreffenden Routen erst dann erzeugt werden, wenn der Zeitpunkt des Eintreffens des ersten Mähdreschers 1 an der zu bearbeitenden Fläche und der bis dahin vom zweiten Mähdrescher erzielte Arbeitsfortschritt genau bekannt sind, ist ein sehr flexibles Reagieren auf nicht genau vorhersagbare Fahrzeiten der Fahrzeuge zwischen den zu bearbeitenden Flächen möglich.

Es ist leicht nachvollziehbar, dass die oben beschriebenen Tätigkeiten der fahrzeuggestützten Steuereinheit 18 auch von einer stationären Steuereinheit basierend auf vom Bordcomputer 2 des Mähdreschers 1 zur Verfügung gestellten Informationen ausgeführt werden können. So können zum Beispiel auf dem Computer 10 neben einem Programm 19, das die oben beschriebene Dispositionstätigkeit erledigt, Dienstprogramme laufen, die jeweils als Steuereinheiten 21 für die aktuell im Einsatz befindlichen Nutzfahrzeuge dienen und von denen eines dem Mähdrescher 1 zugeordnet ist.

Da eine solche fahrzeugexterne Steuereinheit 21 ohnehin eine Mobilfunkschnittstelle benötigt, um über das Mobilfunknetz 9 mit dem Bordcomputer 2 kommunizieren zu können, kann mit geringem Aufwand die Möglichkeit geschaffen werden, dass sie über diese Schnittstelle die aktuelle geographische Position beim Eintreffen des Mähdreschers 1 an der zu bearbeitenden Fläche auch vom Mobiltelefon 16 des Fahrers empfangen kann.

Die Ermittlung des Arbeitskontexts ist für die fahrzeugexterne Steuereinheit 21 sehr schnell und effizient möglich, da im Gegensatz zum weiter oben betrachten Fall keine Daten von anderen Arbeitskontexten als dem, für den der Mähdrescher 1 eingeteilt worden ist, an dessen Bordcomputer 2 per Mobilfunk übertragen werden müssen.

Es liegt auf der Hand, dass die Steuereinheit auch verteilt sein kann: Derjenige Teil von ihr, der für die Ermittlung des Arbeitskontexts zuständig ist, kann am Computer 10 angesiedelt sein, während die Ermittlung der für den Arbeitskontext relevanten Daten im Bordcomputer 2 stattfinden kann.

Das auf dem Computer 10 laufende Dispositionsprogramm 19 kann als weitere Steuereinheit 19 im Rahmen des erfindungsgemäßen Systems aufgefasst werden. Aufgabe dieses Programms ist, anhand der in der Flächen-Datenbank 11 verzeichneten Arbeitskontexte und der technischen Daten der zu deren Erledigung verfügbaren Fahrzeuge in der Fahrzeug-Datenbank 13 für die jeweils in der nächsten Zukunft zur Erledigung anstehenden Arbeitskontexte zu deren Erledigung geeignete und verfügbare Fahrzeuge zu ermitteln. Nachdem eine solche Festlegung getroffen worden ist, kann diese Steuereinheit 19 die bereits erwähnten Weisungen an die betreffenden Fahrzeuge bzw. ihre Fahrer ausgeben. Da die Steuereinheit 19 über die Flächen-Datenbank 11 Zugriff auf alle dort gespeicherten, für die Bearbeitung einer gegebenen Fläche relevanten Informationen wie zum Beispiel die zu erntende Pflanzensorte und über die Fahrzeug-Datenbank 13 Zugriff auf die technischen Daten eines Fahrzeugs hat, kann sie für den Betrieb des Fahrzeugs in dem ihm zugewiesenen Arbeitskontext relevante Daten zusammenstellen, indem sie zum Beispiel anhand der Sorte empfohlene Dreschwerkeinstellungen vom Server 13 abfragt, in Kenntnis des Grenzverlaufs der Fläche, eventuell der Lage von Zufahrten und sonstigen in der Flächen-Datenbank 11 verzeichneten Besonderheiten der Fläche und der in der Fahrzeug-Datenbank 12 verzeichneten Arbeitsbreite eines Fahrzeugs, beispielsweise der Breite des Erntevorsatzes 5 im Falle des Mähdreschers 1, eine zweckmäßige Route auf der Fläche plant und die so zusammengestellten Daten für die Abfrage durch den Bordcomputer 2 bereitstellt.

### Bezugszeichen

- 1: Mähdrescher
- 2: Bordcomputer
- 3: Funkschittstelle
- 4: Aktor
- 5: Erntevorsatz
- 6: Sensor
- 7: Bus
- 8: Basisstation
- 9: Mobilfunknetz
- 10: Computer
- 11: Flächen-Datenbank
- 12: Fahrzeug-Datenbank
- 13: Server
- 14: Server
- 15: Internet
- 16: Mobiltelefon
- 17: Navigationssystem
- 18: Steuereinheit
- 19: Steuereinheit
- 20: Kommunikationsprogramm
- 21: Steuereinheit
- 22:

## Patentansprüche

1. System zum Steuern des Betriebs eines landwirtschaftlichen Nutzfahrzeugs (1), mit einer Steuereinheit(18; 19; 22), die eingerichtet ist, in einem ersten Schritt einen Arbeitskontext zu ermitteln, in dem das Nutzfahrzeug (1) eingesetzt werden soll, und in einem zweiten Schritt für den Betrieb des Nutzfahrzeugs (1) in dem ermittelten Arbeitskontext relevante Daten zusammenzustellen, **dadurch gekennzeichnet, dass** die Steuereinheit (18; 22) mit einem Positionssensor (17) des Nutzfahrzeugs (1) und mit einem Werkzeugsensor (6) zum Erfassen des Vorhandenseins eines Arbeitswerkzeugs (5) des Nutzfahrzeugs (1)nachrichtentechnisch verbunden ist, um den Arbeitskontext anhand der Position des Nutzfahrzeugs (1) und anhand des Vorhandenseins oder Nichtvorhandenseins des Arbeitswerkzeugs (5) zu identifizieren und das die Steuereinheit(18) in einem Bordcomputer (2) des Nutzfahrzeugs (1) realisiert ist und das System ferner einen Computer (10) zum Bereitstellen wenigstens eines ersten Teils der für den Betrieb wenigstens des einen Nutzfahrzeugs relevanten Daten umfasst und der erste Teil der Daten intermediäre Daten umfasst, anhand derer die Steuereinheit(18) oder der Computer (10) in der Lage ist, einen zweiten Teil der relevanten Daten von einem entfernten Server (13) anzufordern.

2. System nach Anspruch 1, **dadurch gekennzeichnet, dass** dem Nutzfahrzeug (1) ein Mobiltelefon (16) mit Positionssensor zugeordnet ist und die Steuereinheit (22) mit dem Mobiltelefon (16) nachrichtentechnisch verbunden ist, um den Arbeitskontext anhand der Position des Mobiltelefons (16) zu identifizieren.

3. System nach einem der vorhergehenden Ansprüche, **dadurch gekennzeichnet, dass** ein Arbeitskontext wenigstens eine zu bearbeitende Fläche und eine auf der Fläche durchzuführende Arbeit spezifiziert.

4. System nach einem der vorhergehenden Ansprüche, **dadurch gekennzeichnet, dass** die relevanten Daten eine im Rahmen des Arbeitskontexts zu fahrende Route und/oder eine Dosierung eines zu verteilenden Materials und/oder eine Eigenschaft von Erntegut und/oder Wetterdaten und/oder einen Wert eines Betriebsparameters des Fahrzeugs oder eines Arbeitswerkzeugs spezifizieren.

5. System nach einem der vorhergenannten Ansprüche, **dadurch gekennzeichnet, dass** die Steuereinheit (18) eingerichtet ist, auf den Computer (10) und/oder den entfernten Server (13) über eine Funkverbindung, insbesondere über mobiles Internet, zuzugreifen.

6. System nach einem der Ansprüche 1 bis 4, **dadurch gekennzeichnet, dass** die Steuereinheit (21) an einem fahrzeugexternen Computer (10) realisiert ist und eingerichtet ist, die zusammengestellten Daten an einen Bordcomputer (2) des Nutzfahrzeugs über eine Funkverbindung, insbesondere über mobiles Internet, zu übertragen.

7. System nach Anspruch 6, **dadurch gekennzeichnet, dass** am Computer (10) intermediäre Daten gespeichert sind, anhand derer der Computer (10) in der Lage ist, wenigstens einen Teil der relevanten Daten von einem entfernten Server (13) anzufordern.

8. System nach einem der Ansprüche 5 bis 7, **dadurch gekennzeichnet, dass** der Bordcomputer (2) eingerichtet ist, während des Einsatzes in einem Arbeitskontext gesammelte, die zu bearbeitende Fläche und/oder den Fortschritt der Arbeit betreffende Informationen an den fahrzeugexternen Computer (10) zurückzumelden.

9. System nach Anspruch 8, **dadurch gekennzeichnet, dass** der fahrzeugexterne Computer (10) eingerichtet ist, anhand der zurückgemeldeten Informationen die relevanten Daten zu aktualisieren.

10. System nach Anspruch 8 oder 9, **dadurch gekennzeichnet, dass** der fahrzeugexterne Computer (10) eingerichtet ist, anhand der zurückgemeldeten Informationen über die Zuordnung eines weiteren Nutzfahrzeuges zu dem Arbeitskontext zu entscheiden.

11. System nach Anspruch 10, **dadurch gekennzeichnet, dass** der fahrzeugexterne Computer (10) eingerichtet ist, für den Betrieb des weiteren Nutzfahrzeugs in dem ermittelten Arbeitskontext relevante Daten zusammenzustellen.

## Claims

1. A system for controlling the operation of an agricultural utility vehicle (1), having a control unit (18; 19; 22) which is adapted for determining, in a first step, a working context in which the utility vehicle (1) is to be deployed, and in a second step to collate data relevant to the operation of the utility vehicle (1) in the determined working context, **characterized in that** the control unit (18; 22) is communicatively connected to a position sensor (17) of the utility vehicle (1) and to a tool sensor (6) for detecting the presence of a working tool (5) of the utility vehicle (1), in order to identify the working context on the basis of the position of the utility vehicle (1) and on the basis of the presence or absence of the working tool (5), and **in that** the control unit (18) is installed in an on board computer (2) of the utility vehicle (1), and the system furthermore comprises a computer (10) for the provision of at least a first portion of the data relevant to the operation of at least one utility vehicle, and the first portion of the data comprises intermediate data on the basis of which the control unit (18) or the computer (10) is in a position to request a second portion of the relevant data from a remote server (13).

2. The system according to claim 1, **characterized in that** a mobile phone (16) with a position sensor is allocated to the utility vehicle (1) and the control unit (22) is communicatively connected to the mobile phone (16) in order to identify the working context on the basis of the position of the mobile phone (16).

3. The system according to one of the preceding claims, **characterized in that** a working context specifies at least one area to be worked and a piece of work to be carried out on the area.

4. The system according to one of the preceding claims, **characterized in that** the relevant data specify a route to be travelled in the context of the working context and/or a dose of a material to be distributed and/or a property of harvested crop and/or weather data and/or a value of an operating parameter of the vehicle or of a working tool.

5. The system according to one of the claims defined above, **characterized in that** the control unit (18) is configured to access the computer (10) and/or the remote server (13) via a radio link, in particular via mobile internet.

6. The system according to one of claims 1 to 4, **characterized in that** the control unit (21) is installed on a computer (10) which is external to the vehicle and is configured to transfer the collated data to an on board computer (2) of the utility vehicle via a radio link, in particular via mobile internet.

7. The system according to claim 6, **characterized in that** intermediate data are stored in the computer (10), on the basis of which the computer (10) is in a position to request at least a portion of the relevant data from a remote server (13).

8. The system according to one of claims 5 to 7, **characterized in that** the on board computer (2) is configured to report information collected during deployment in a working context concerning the area to be worked and/or the progress of the work to the computer (10) which is external to the vehicle.

9. The system according to claim 8, **characterized in that** the computer (10) which is external to the vehicle is configured to update the relevant data on the basis of the report information.

10. The system according to claim 8 or claim 9, **characterized in that** the computer (10) which is external to the vehicle is configured to decide about allocation of a further utility vehicle to the working context on the basis of the report information.

11. The system according to claim 10, **characterized in that** the computer (10) which is external to the vehicle is configured to collate data relevant to the operation of the further utility vehicle in the determined working context.

## Revendications

1. Système pour commander le fonctionnement d'un véhicule utilitaire agricole (1), comprenant une unité de commande (18 ; 19 ; 22) qui est agencée pour, dans une première étape, déterminer un contexte de travail dans lequel le véhicule utilitaire (1) doit être mis en œuvre et pour, dans une seconde étape, compiler des données pertinentes pour le fonctionnement du véhicule utilitaire (1) dans le contexte de travail déterminé, **caractérisé en ce que** l'unité de commande (18 ; 22) est reliée par la technique des communications à un capteur de position (17) du véhicule utilitaire (1) et à un capteur d'outil (6) pour détecter la présence d'un outil de travail (5) du véhicule utilitaire (1) afin d'identifier le contexte de travail sur la base de la position du véhicule utilitaire (1) et sur la base de la présence ou de la non-présence de l'outil de travail (5), et **en ce que** l'unité de commande (18) est réalisée dans un ordinateur de bord (2) du véhicule utilitaire (1), et le système inclut en outre un ordinateur (10) pour fournir au moins une première partie des données pertinentes pour le fonctionnement au moins du un véhicule utilitaire, et la première partie des données incluant des données intermédiaires sur la base desquelles l'unité de commande (18) ou l'ordinateur (10) est en mesure de demander une seconde partie des données pertinentes à un serveur distant (13).

2. Système selon la revendication 1, **caractérisé en ce qu'**au véhicule utilitaire (1) est associé un téléphone mobile (16) avec un capteur de position, et l'unité de commande (22) est reliée par la technique des communications au téléphone mobile (16) afin d'identifier le contexte de travail sur la base de la position du téléphone mobile (16).

3. Système selon une des revendications précédentes, **caractérisé en ce qu'**un contexte de travail spécifie au moins une surface à traiter et un travail à effectuer sur la surface.

4. Système selon une des revendications précédentes, **caractérisé en ce que** les données pertinentes spécifient un itinéraire à parcourir dans le cadre du contexte de travail et/ou un dosage d'un matériau à épandre et/ou une propriété de produit récolté et/ou des données météorologiques et/ou une valeur d'un paramètre d'exploitation du véhicule ou d'un outil de travail.

5. Système selon une des revendications précédentes, **caractérisé en ce que** l'unité de commande (18) est agencée pour accéder à l'ordinateur (10) et/ou au serveur distant (13) par l'intermédiaire d'une liaison radio, en particulier par l'intermédiaire de l'Internet mobile.

6. Système selon une des revendications 1 à 4, **caractérisé en ce que** l'unité de commande (21) est réalisée sur un ordinateur (10) extérieur au véhicule et agencée pour transmettre les données compilées à un ordinateur de bord (2) du véhicule utilitaire par l'intermédiaire d'une liaison radio, en particulier par l'intermédiaire de l'Internet mobile.

7. Système selon la revendication 6, **caractérisé en ce que** sur l'ordinateur (10) sont mémorisées des données intermédiaires sur la base desquelles l'ordinateur (10) est en mesure de demander au moins une partie des données pertinentes à un serveur distant (13).

8. Système selon une des revendications 5 à 7, **caractérisé en ce que** l'ordinateur de bord (2) est agencé pour renvoyer à l'ordinateur (10) extérieur au véhicule des informations recueillies pendant la mise en œuvre dans un contexte de travail, relatives à la surface à travailler et/ou à l'avancement du travail.

9. Système selon la revendication 8, **caractérisé en ce que** l'ordinateur (10) extérieur au véhicule est agencé pour actualiser les données pertinentes sur la base des informations renvoyées.

10. Système selon la revendication 8 ou 9, **caractérisé en ce que** l'ordinateur (10) extérieur au véhicule est agencé pour décider, sur la base des informations renvoyées, de l'association d'un véhicule utilitaire supplémentaire.

11. Système selon la revendication 10, **caractérisé en ce que** l'ordinateur (10) extérieur au véhicule est agencé pour compiler des données pertinentes pour le fonctionnement du véhicule utilitaire supplémentaire dans le contexte de travail déterminé.
